# EUROPÄISCHE PATENTANMELDUNG

(11) **EP 2 735 833 A2**
(43) Veröffentlichungstag der Anmeldung: **28.05.2014**
(21) Anmeldenummer: 13193026.5
(22) Anmeldetag: 15.11.2013
(51) Int. Cl.: F28D 9/00, F28D 21/00, F01N 5/02, F02G 5/02, F01K 15/02, F01K 23/06

(54) **Verdampfer zur teilweisen oder vollständigen Verdampfung eines Flüssigkeitsstromes**

(30) Priorität: 21.11.2012 DE 102012022676
(71) Anmelder: Voith Patent GmbH, 89522 Heidenheim (DE)
(72) Erfinder: Berger, Jürgen, 89547 Gerstetten (DE); Lorenz, Andreas, 89522 Heidenheim (DE); Bausch, Christian, 89347 Bubesheim (DE); Grieser, Jens, 89555 Söhnstetten (DE)
(74) Vertreter: Dr. Weitzel & Partner

(57) **Zusammenfassung**

Die Erfindung betrifft einen Verdampfer zur teilweisen oder vollständigen Verdampfung eines Flüssigkeitsstromes, insbesondere des Arbeitsmediums eines Dampfmotors in einem Dampfkreislauf, mit einer Primärseite, die einen gasförmigen Wärmeträger führt; mit einer Sekundärseite, die den Flüssigkeitsstrom und einen aus dem Flüssigkeitsstrom durch Verdampfung mit Wärme aus dem Wärmeträger gewonnenen Dampfstrom führt, wobei die Primärseite einen ersten Strömungskanal für den gasförmigen Wärmeträger aufweist, der sich von einem Wärmeträgereinlass zu einem Wärmeträgerauslass erstreckt, oder eine Vielzahl von ersten Strömungskanälen für den gasförmigen Wärmeträger aufweist, die sich strömungsleitend getrennt voneinander oder strömungsleitend verbunden miteinander im Wesentlichen parallel zueinander entlang einer Längsachse des Verdampfers von einem gemeinsamen Wärmeträgereinlass zu einem gemeinsamen Wärmeträgerauslass erstrecken, und die Sekundärseite einen zweiten Strömungskanal oder eine Vielzahl von hinsichtlich der Durchströmung mit dem Flüssigkeitsstrom und/oder Dampfstrom parallel geschaltete zweite Strömungskanäle aufweist, die sich von einem gemeinsamen Flüssigkeitseinlass zu einem gemeinsamen Dampfauslass erstrecken. Die Erfindung ist dadurch gekennzeichnet, dass die Sekundärseite ferner einen dritten Strömungskanal oder eine Vielzahl von hinsichtlich der Durchströmung parallel geschaltete dritte Strömungskanäle aufweist, der/die einen Kühlmediumstrom von einem gemeinsamen Kühlmediumeinlass zu einem gemeinsamen Kühlmediumauslass führen und der/die mit der Primärseite in wärmeübertragender Verbindung steht/stehen, um den gasförmigen Wärmeträger zu kühlen.

## Beschreibung

Die vorliegende Erfindung betrifft einen Verdampfer zur teilweisen oder vollständigen Verdampfung eines Flüssigkeitsstromes, insbesondere des Arbeitsmediums eines Dampfmotors in einem Dampfkreislauf, im Einzelnen gemäß dem Oberbegriff von Anspruch 1. Die Erfindung betrifft ferner ein Abwärmenutzsystem eines Verbrennungsmotors einer stationären Anlage oder eines Kraftfahrzeugs, insbesondere Nutzfahrzeugs, mit einer Abgasrückführung eines Abgasstromes von der Abgasseite auf die Frischluftseite des Verbrennungsmotors, wobei in der Abgasrückführung ein entsprechender Verdampfer zum Verdampfen des Arbeitsmediums eines Dampfmotors und zum Kühlen des Abgasstromes der Abgasrückführung positioniert ist.

In Verdampfern wird die Wärme von einer Primärseite auf eine Sekundärseite übertragen, um einen die Sekundärseite beaufschlagenden Flüssigkeitsstrom zu verdampfen. Die vorliegende Erfindung betrifft dabei nur solche Verdampfer, bei denen die Primärseite einen gasförmigen Wärmeträger führt, dessen Wärme zur Verdampfung des Flüssigkeitsstromes auf der Sekundärseite verwendet wird.

Herkömmliche Verdampfer weisen demgemäß einen Wärmeträgereinlass und einen Wärmeträgerauslass auf, sodass der Wärmeträger über den Wärmeträgereinlass entlang der Primärseite zu dem Wärmeträgerauslass und über diesen aus dem Verdampfer herausgeleitet werden kann, wobei sich der Wärmeträger dabei naturgemäß abkühlt, und ferner weisen sie einen Flüssigkeitseinlass auf, über welchen der zu verdampfende Flüssigkeitsstrom in den Verdampfer eingeleitet werden kann, weiter entlang der Sekundärseite, wobei er verdampft wird, und anschließend in dampfförmiger Form über einen Dampfauslass aus dem Verdampfer heraus.

Wenn ein solcher Verdampfer in der Abgasrückführung eines Verbrennungsmotors eingesetzt wird, ist es ferner bekannt, den dann als Wärmeträger dienenden rückgeführten Abgasstrom mittels eines Abgasrückführungskühlers zu kühlen, nachdem er aus dem Wärmeträgerauslass aus dem Verdampfer herausgeleitet wurde. Das Vorsehen eines solchen Abgasrückführungskühlers ist konstruktiv aufwändig, erfordert zusätzlichen Bauraum und verteuert das Abgassystem des Verbrennungsmotors, weshalb, wann immer möglich, auf einen solchen Kühler verzichtet wird. Bei einem Verzicht auf einen solchen Kühler können jedoch Betriebszustände auftreten, in denen der auf die Frischluftseite des Verbrennungsmotors rückgeführte Abgasstrom mit vergleichsweise hoher Temperatur in den Verbrennungsmotor bzw. einen zum Verbrennungsmotor geführten Frischluftstrom eintritt, was sich ungünstig auf die Abgaswerte des Verbrennungsmotors auswirken kann.

Der vorliegenden Erfindung liegt die Aufgabe zugrunde, einen Verdampfer der eingangs dargestellten Art derart zu verbessern, dass bei einem Einsatz in der Abgasrückführung eines Verbrennungsmotors ungünstig hohe Temperaturen des rückgeführten Abgasstromes sicher vermieden werden und zugleich der konstruktive Aufwand im Vergleich zu bisherigen Systemen mit einem zusätzlichen Kühler vermieden wird.

Die erfindungsgemäße Aufgabe wird durch einen Verdampfer mit den Merkmalen von Anspruch 1 gelöst. In den abhängigen Ansprüchen sind vorteilhafte und besonders zweckmäßige Ausgestaltungen der Erfindung angegeben.

Ein erfindungsgemäßer Verdampfer zur teilweisen oder vollständigen Verdampfung eines Flüssigkeitsstromes, insbesondere des Arbeitsmediums eines Dampfmotors, letzterer beispielsweise in Form einer Kolbenmaschine oder Turbine, in einem Dampfkreislauf weist eine Primärseite auf, die einen gasförmigen Wärmeträger führt, sowie eine Sekundärseite, die den Flüssigkeitsstrom und einen aus dem Flüssigkeitsstrom durch Verdampfung mit Wärme aus dem Wärmeträger gewonnenen Dampfstrom führt. Die Primärseite weist einen ersten Strömungskanal für den gasförmigen Wärmeträger auf, der sich von einem Wärmeträgereinlass zu einem Wärmeträgerauslass erstreckt, oder sie weist eine Vielzahl von ersten Strömungskanälen für den gasförmigen Wärmeträger auf, die sich strömungsleitend getrennt voneinander oder strömungsleitend verbunden miteinander im Wesentlichen parallel zueinander entlang einer Längsachse des Verdampfers von einem gemeinsamen Wärmeträgereinlass zu einem gemeinsamen Wärmeträgerauslass erstrecken.

Die Sekundärseite weist einen zweiten Strömungskanal oder eine Vielzahl von hinsichtlich der Durchströmung mit dem Flüssigkeitsstrom und/oder Dampfstrom parallel geschalteten zweiten Strömungskanälen auf, die sich von einem (gemeinsamen) Flüssigkeitseinlass zu einem (gemeinsamen) Dampfauslass erstrecken.

Erfindungsgemäß weist die Sekundärseite ferner einen dritten Strömungskanal oder eine Vielzahl von hinsichtlich der Durchströmung parallel geschaltete dritte Strömungskanäle auf, der/die einen Kühlmediumstrom von einem (gemeinsamen) Kühlmediumeinlass zu einem (gemeinsamen) Kühlmediumauslass führen, wobei der oder die dritten Strömungskanäle in wärmeübertragender Verbindung mit der Primärseite stehen, um den gasförmigen Wärmeträger zu kühlen. Der Kühlmediumstrom kann vorteilhaft vom Flüssigkeitsstrom und Dampfstrom des oder der zweiten Strömungskanäle mediumdicht abgehtrennt sein, wobei beide Ströme vorteilhaft in verschiedenen Kreisläufe umlaufen.

Eine vorteilhafte Ausführungsform der Erfindung sieht vor, dass die Primärseite einen Verdampferbereich und einen Kühlerbereich aufweist, durch welche der oder die ersten Strömungskanäle verlaufen, wobei in Strömungsrichtung des gasförmigen Wärmeträgers durch den oder die ersten Strömungskanäle der Verdampferbereich in Reihe vor den Kühlerbereich geschaltet ist.

Günstig ist es, wenn der oder die axialen Abschnitte des oder der ersten Strömungskanäle im Verdampferbereich mit dem oder den axialen Abschnitten des oder der ersten Strömungskanäle im Kühlerbereich fluchten und insbesondere in Axialrichtung des Verdampfers gesehen deckungsgleich ausgeführt sind. Man könnte solche ersten Strömungskanäle auch als in Axialrichtung vollständig durchgehende Strömungskanäle bezeichnen.

Vorteilhaft sind in Axialrichtung des Verdampfers gesehen der Wärmeträgereinlass, der oder die axialen Abschnitte des oder der ersten Strömungskanäle im Verdampferbereich, der oder die axialen Abschnitte des oder der ersten Strömungskanäle im Kühlerbereich und der Wärmeträgerauslass in dieser genannten Reihenfolge unmittelbar hintereinander angeordnet, wobei der Kühlmediumauslass und der Flüssigkeitseinlass in Axialrichtung des Verdampfers mit Abstand zu dem Kühlmediumeinlass, dem Wärmeträgerauslass, dem Dampfauslass und dem Wärmeträgereinlass positioniert sind.

Eine vorteilhafte Ausführungsform sieht vor, dass der Verdampfer eine Vielzahl von wärmeleitenden, aufeinandergestapelte Platten, die insbesondere mit den gasförmigen Wärmeträger, den Flüssigkeitsstrom und/oder Dampfstrom und/oder den Kühlmediumstrom leitenden Lamellen versehen sind, aufweist, welche die Primärseite wechselseitig von der Sekundärseite mediumdicht trennen und die Primärseite und die Sekundärseite insbesondere zusammen mit zwischen den Platten vorgesehenen Stegen vorteilhaft gegenüber der Umgebung abdichten, wobei die Vielzahl der ersten Strömungskanäle in Stapelrichtung der Platten in jedem zweiten Zwischenraum zwischen den Platten ausgeführt sind. Beispielsweise können in Stapelrichtung der Platten die Strömungskanäle der Primärseite, d.h. die ersten Strömungskanäle, abwechselnd zu den Strömungskanälen der Sekundärseite, d.h. den zweiten und dritten Strömungskanälen angeordnet sein, wobei die zweiten und dritten Strömungskanäle jeweils gemeinsam in einem Zwischenraum zwischen zwei Platten vorgesehen sind.

Um eine modulare Bauweise zu erreichen, bei der dem Verdampferbereich flexibel ein oder mehrere Kühlerbereiche nachgeschaltet werden können, weist der Verdampfer wenigstens eine Schnittstelle zwischen dem Verdampferbereich und dem Kühlerbereich und insbesondere zwischen zwei hintereinander positionierten Kühlerbereichen auf, in welcher zwei voneinander lösbare Module zusammengefügt sind. Die Module können insbesondere aneinander angeflanscht sein, beispielsweise mittels eines Umfangsflansches an den beiden sich gegenüberstehenden axialen Enden von zwei Modulen, die die Schnittstelle bilden. Andere Ausführungsformen sind möglich. Ferner ist auch die Vorschaltung eines Vorwärmerbereiches in integraler Bauweise mit dem Verdampferbereich oder in der dargestellten Modularbauweise möglich. Dieser würde sich dann vom Wärmeträgereinlass zum Verdampferbereich erstrecken.

Gemäß einer Ausführungsform ist zwischen den axialen Abschnitten der ersten Strömungskanäle im Modul mit dem Verdampferbereich und den axialen Abschnitten der ersten Strömungskanäle im Modul mit dem Kühlerbereich und/oder zwischen den Modulen der verschiedenen Kühlerbereiche ein Axialspalt vorgesehen, über welchen der gasförmige Wärmeträger hinwegströmt. Alternativ wird durch Anliegen der Strömungskanäle bzw. der Platten aneinander ein solcher Axialspalt vermieden. Entsprechendes gilt bei Vorsehen eines Vorwärmerbereiches.

Günstig ist es, wenn das Modul mit dem Verdampferbereich und das Modul mit dem Kühlerbereich jeweils an ihrem die Schnittstelle bildenden axialen Ende oder insbesondere an beiden axialen Enden einen Umfangsflansch aufweisen und die axialen Enden der Platten eines der beiden Module an der Schnittstelle in Axialrichtung aus dem Umfangsflansch herausragen und im verschraubten Zustand der die Schnittstelle bildenden Umfangsflansche bis in den Flansch des anderen Moduls hineinragen. Entsprechendes gilt für die Schnittstelle zwischen zwei hintereinander vorgesehenen Kühlerbereichen oder zwischen dem Vorwärmerbereich und dem Verdampferbereich. Hierdurch ist es möglich, den Axialspalt besonders klein zu halten oder sogar zu vermeiden.

Um einen möglichst geringen Druckverlust des gasförmigen Wärmeträgers auf der Primärseite zu erreichen, kann die Anzahl der ersten Strömungskanäle vom gemeinsamen Wärmeträgereinlass zum gemeinsamen Wärmeträgerauslass konstant sein. Die Anzahl der dritten parallel geschalteten Strömungskanäle kann hingegen vorteilhaft von der Anzahl der in dem gemeinsamen Dampfauslass mündenden zweiten Strömungskanäle abweichen, insbesondere größer sein. So ist es nämlich möglich, im Verdampferbereich den Stapel aus Platten mit einer vergleichsweise stärkeren Deckplatte und einer vergleichsweise stärkeren/massiveren Bodenplatte abzuschließen als in dem Kühlerbereich. So kann insbesondere die Deckplatte und/oder die Bodenplatte des Verdampferbereichs frei von integrierten Strömungskanälen ausgeführt sein, wohingegen in die Deckplatte und/oder die Bodenplatte des Kühlerbereichs jeweils einer oder eine Vielzahl von dritten Strömungskanälen integriert ist.

Wenn zwei verschiedene Kühlerbereiche vorgesehen sind, so kann die Sekundärseite einen vierten Strömungskanal oder eine Vielzahl von hinsichtlich der Durchströmung parallel geschalteten vierten Strömungskanälen aufweisen, der/die einen zweiten Kühlmediumstrom von einem gemeinsamen zweiten Kühlmediumeinlass zu einem gemeinsamen zweiten Kühlmediumauslass führen und der/die mit der Primärseite in wärmeübertragender Verbindung steht/stehen, um den gasförmigen Wärmeträger zu kühlen. In diesem Fall kann vorteilhaft der erste Kühlerbereich als Hochtemperaturkühlerbereich und der zweite Kühlerbereich als Niedertemperaturkühlerbereich ausgeführt sein, d.h. der zweite Kühlmediumstrom weist eine geringere Temperatur als der erste Kühlmediumstrom auf.

Um bei der Positionierung des Verdampfers in einem Abgasstrom eines Verbrennungsmotors, insbesondere in einer Abgasrückführung, den Druckverlust des gasförmigen Wärmeträgers, nämlich Abgas, auf der Primärseite weiter zu verringern, kann der Strömungsquerschnitt für den gasförmigen Wärmeträger in zwei, insbesondere gleich große Strömungsdurchgänge unterteilt sein, wobei die Unterteilung teilweise oder vollständig gasdicht ausgeführt ist oder zumindest derart ausgeführt ist, dass eine wesentliche Durchmischung der beiden Gasströme in den beiden Strömungsdurchgängen bzw. Strömungskanalanteilen vermieden wird. Hierzu kann es günstig sein, in dem Axialspalt zwischen den axialen Abschnitten der ersten Strömungskanäle im Bereich der Schnittstelle oder auch in mehreren Schnittstellen einen Trennsteg vorzusehen, welcher den Strömungsquerschnitt für den gasförmigen Wärmeträger in diese beiden Strömungsdurchgänge unterteilt. Zusätzlich oder alternativ kann im gemeinsamen Wärmeträgereinlass und/oder im gemeinsamen Wärmeträgerauslass ein entsprechender Trennsteg vorgesehen sein.

Ein erfindungsgemäßes Abwärmenutzsystem eines Verbrennungsmotors weist eine Abgasrückführung mit einem Abgasstrom von einer Abgasseite des Verbrennungsmotors auf eine Frischluftseite des Verbrennungsmotors auf, wobei in der Abgasrückführung ein erfindungsgemäßer Verdampfer positioniert ist, dessen Primärseite mit dem Abgasstrom der Abgasrückführung als gasförmigem Wärmeträger beaufschlagt ist. Vorteilhaft ist ein Dampfmotor in einem Dampfkreislauf vorgesehen, wobei in dem Dampfmotor ein Arbeitsmediumstrom, der zuvor in dem Verdampfer verdampft wurde, unter Verrichtung mechanischer Arbeit expandiert. Demgemäß ist die Sekundärseite des Verdampfers im Verdampferbereich zur Verdampfung des Arbeitsmediums mit dem Arbeitsmediumstrom beaufschlagt. Die Antriebsleistung des Dampfmotors kann entweder als zusätzliche Antriebsleistung zu der Antriebsleistung des Verbrennungsmotors für ein durch beide Motoren angetriebenes Aggregat oder Antriebsrädern zur Verfügung gestellt werden, oder der Verbrennungsmotor und der Dampfmotor treiben verschiedene Aggregate an, bzw. der Verbrennungsmotor treibt beispielsweise Antriebsräder und der Dampfmotor ein anderes Aggregat eines Kraftfahrzeugs an oder umgekehrt.

Ein Dampfmotor kann gemäß der vorliegenden Erfindung als Kolbenmaschine ausgeführt sein, mit einem oder mehreren Zylindern. Es kommen jedoch auch andere Expansionsmaschinen in Betracht, beispielsweise eine Turbine.

Durch die Erfindung kann eine bauraum- und druckverlustminimierte Integration eines Verdampfers mit einem Kühler und gegebenenfalls einem Vorwärmer erreicht werden, wobei bei einem modularen Aufbau mit einem Verdampfermodul und einem oder mehreren Kühlermodulen/Vorwärmermodulen, die derart in Axialrichtung des Verdampfers aneinander angeschlossen werden können, dass eine lineare Durchströmung des Verdampfers und aller Kühlermodule/Vorwärmermodule mit dem gasförmigen Wärmeträger, insbesondere mit Abgas, erreicht wird, eine beliebige Kombinierbarkeit der einzelnen Wärmeüberträger auf der Sekundärseite geschaffen wird. So ist es besonders leicht möglich, in einer Abgasrückführung mehrere Abgasrückführungskühler in Hochtemperatur- und Niedertemperaturkreisläufen mit einem Verdampfer zu kombinieren.

Insbesondere bei der Hintereinanderschaltung mehrerer Abgasrückführungskühler kann die Austrittstemperatur des Abgases aus dem erfindungsgemäßen Verdampfer erheblich reduziert werden, beispielsweise auf 70°C oder weniger. Auch beim Vorsehen nur eines Kühlers kann beispielsweise die entsprechende Temperatur auf 130°C oder weniger abgesenkt werden im Vergleich zu beispielsweise 180°C bei herkömmlichen Verdampfern in Abgasrückführungen.

Im Bereich des Wärmeträgerauslasses und/oder an den axialen Enden der ersten Strömungskanäle, die im Wärmeträgerauslass münden, können Rückschlagventile oder sog. Flatterventile vorgesehen sein, um eine Rückströmung des gasförmigen Wärmeträgers zu vermeiden. Selbstverständlich ist die Integration solcher Ventile auch an anderen Stellen möglich.

Der Wärmeträgereinlass kann insbesondere durch ein am ersten axialen Ende der ersten Strömungskanäle anschließbares Einlassmodul gebildet werden. Der Wärmeträgerauslass ist abweichend hiervon vorteilhaft unlösbar an den ersten Strömungskanälen angeschlossen und hinsichtlich seines Anschlussmusters an jedem axialen Ende der einzelnen Module identisch.

Wenn der Verdampfer als gestapelter Plattenverdampfer ausgeführt ist und Lamellen und/oder Stege bzw. Trennbleche zur Strömungsführung auf der Primärseite und/oder der Sekundärseite aufweist, so können diese Lamellen bzw. Stege/Trennbleche aus einzelnen axialen Abschnitten aneinander anliegend zusammengesetzt sein.

Die Erfindung soll nachfolgend anhand von Ausführungsbeispielen und den Figuren exemplarisch beschrieben werden.

Es zeigen:
Fig. 1 eine dreidimensionale Ansicht einer ersten Ausführungsform eines modular aufgebauten erfindungsgemäßen Verdampfers;
Fig. 2 eine Draufsicht auf die Stirnseite mit dem Wärmeträgerauslass des Verdampfers aus der Fig. 1;
Fig. 3 eine seitliche Ansicht auf den Verdampfer gemäß der Figuren 1 und 2;
Fig. 4 ein Beispiel für mehrere hintereinandergeschaltete Kühlmodule;
Fig. 5 einen einteiligen erfindungsgemäßen Verdampfer mit Verdampferbereich und Kühlerbereich;
Fig. 6 ein Ausführungsbeispiel für die Strömungsführung auf der Sekundärseite eines erfindungsgemäßen Verdampfers mit Lamellen und Trennstegen;
Fig. 7 ein Ausführungsbeispiel für die Strömungsführung auf der Primärseite eines erfindungsgemäßen Verdampfers mit Lamellen;
Fig. 8 eine exemplarische Darstellung eines Abwärmenutzsystems.

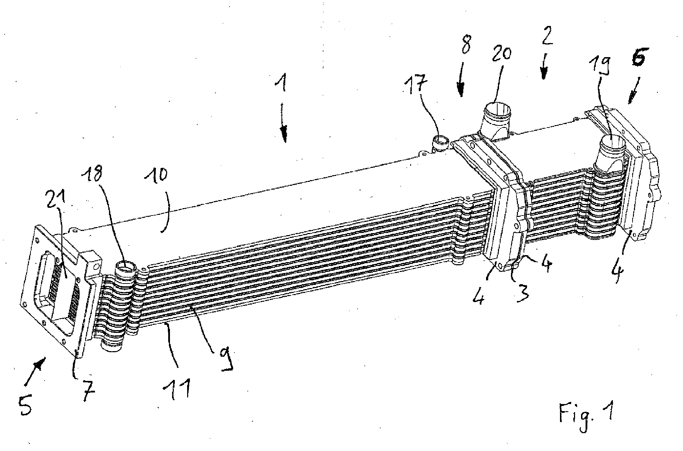

In der Fig. 1 ist eine Draufsicht auf einen erfindungsgemäßen Verdampfer dargestellt. Der Verdampfer weist zwei Module auf, von denen eins einen Verdampferbereich 1 und das andere einen Kühlerbereich 2 bildet. Die beiden Module sind aneinander angeflanscht, siehe die beiden miteinander verschraubten Umfangsflansche 4, und mittels einer Dichtung, insbesondere Kupferdichtung 3, gegeneinander abgedichtet.

Im dargestellten Ausführungsbeispiel weist ferner der Wärmeträgereinlass 5, insbesondere für den Abgasstrom eine Abgasrückführung eines Abgassystems eines Verbrennungsmotors, einen im Vergleich zu den Umfangsflanschen 4 anders gestalteten Flansch 7 auf, wohingegen in dem gezeigten Ausführungsbeispiel der Wärmeträgerauslass 6 mit einem Umfangsflansch 4 versehen ist, der den Umfangsflanschen 4 an der Schnittstelle 8 zwischen dem Verdampferbereich 1 und dem Kühlerbereich 2 entspricht.

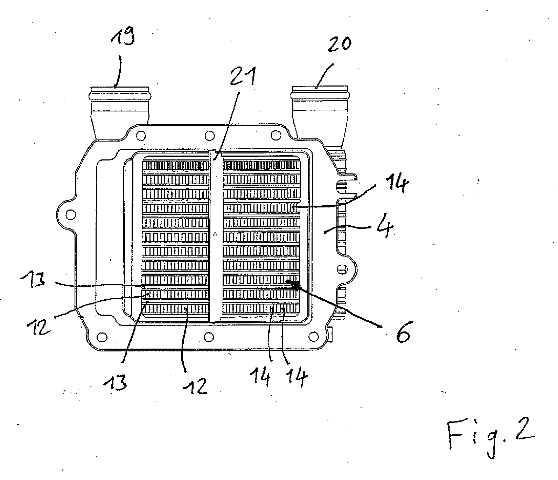

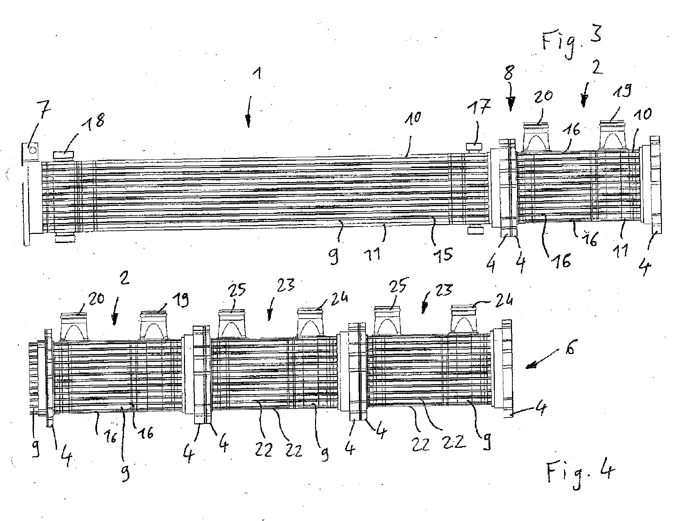

Der Verdampfer ist sowohl im Verdampferbereich 1 als auch im Kühlerbereich 2 aus einer Vielzahl von aufeinandergestapelten Platten 9 gebildet, wobei er auf seiner Oberseite durch eine Deckplatte 10 und auf seiner Unterseite durch eine Bodenplatte 11 abgeschlossen wird. Die Platten 9 bilden zwischen sich in Stapelrichtung wechselseitig die Primärseite 12 mit den ersten Strömungskanälen 14 für den gasförmigen Wärmeträger, insbesondere Abgas, und die Sekundärseite 13 mit den zweiten Strömungskanälen 15 für den zu verdampfenden bzw. verdampften Flüssigkeitsstrom und den dritten Strömungskanälen 16 für den Kühlmediumstrom aus, siehe hierzu auch die Figuren 2 und 3.

Für die zweiten Strömungskanäle 15 ist ein gemeinsamer Flüssigkeitseinlass 17 und ein gemeinsamer Dampfauslass 18 vorgesehen. Wie man sieht, arbeitet der Verdampfer hinsichtlich der Verdampfung des Flüssigkeitsstroms zumindest teilweise im Gegenstromprinzip.

Für den Kühlmediumstrom sind ein gemeinsamer Kühlmediumeinlass 19 und ein gemeinsamer Kühlmediumauslass 20 vorgesehen. Somit arbeitet auch der Kühlerbereich im Gegenstromprinzip.

Im Wärmeträgereinlass 5 ist ein Trennsteg 21 vorgesehen, um den gasförmigen Wärmeträger, insbesondere Abgas, in zwei Bereiche aufzuteilen, ebenso im Wärmeträgerauslass 6, siehe die Fig. 2 und im Bereich der Schnittstelle 8 (nicht erkennbar), in welcher die Platten 9 einen axialen Abstand zueinander aufweisen.

In der Fig. 3 ist angedeutet, dass im Kühlerbereich 2 auf der Sekundärseite mehr parallele Strömungskanäle 16 vorgesehen sind als im Verdampferbereich 1 Strömungskanäle 15 vorgesehen sind. Dies wird dadurch erreicht, dass im Gegensatz zum Verdampferbereich 1 im Kühlerbereich 2 in der Deckplatte 10 und in der Bodenplatte 11 Strömungskanäle der Sekundärseite integriert sind.

In der Fig. 4 wird dargestellt, wie sich an einen ersten Kühlerbereich 2 eine oder mehrere weitere Kühlerbereiche 23 mit vierten Strömungskanälen 22 auf der Sekundärseite des Verdampfers anschließen können. Diese werden wie der Verdampferbereich 1 und der erste Kühlerbereich 2 auf der Primärseite durch entsprechende erste Strömungskanäle 14 vom gasförmigen Wärmeträger in Axialrichtung nahezu linear oder vollständig linear durchströmt, und der gemeinsame Wärmeträgerauslass 6 wird auf der Ausströmseite des letzten Kühlermoduls 23 gebildet. Es kann wieder eine modulare Bauweise gewählt werden, wobei vorteilhaft bauidentische Umfangsflansche 4 vorgesehen sind, um eine beliebige Anzahl von Kühlerbereichen aneinander bzw. an dem Verdampferbereich 1 anschließen zu können. Entsprechend ist es auch möglich, dem Verdampferbereich einen oder mehrere Vorwärmerbereiche vorzuschalten (nicht dargestellt).

In der Fig. 4 erkennt man am linken axialen Ende auch den axialen Überstand der Platten 9 über den Flansch 4 hinaus.

Die vierten Strömungskanäle 22 führen von einem gemeinsamen zweiten Kühlmediumeinlass 24 zu einem gemeinsamen zweiten Kühlmediumauslass 25, jeweils in jedem weiteren Kühlerbereich 23.

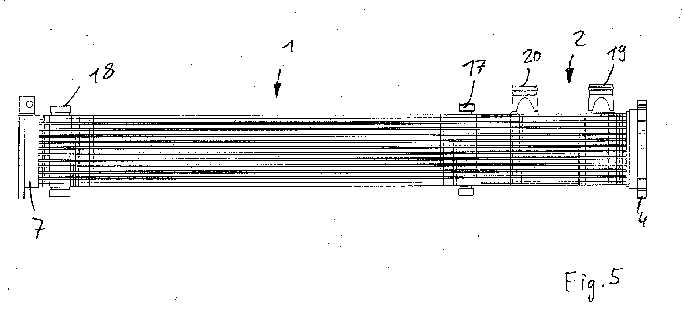

In der Fig. 5 ist ein Verdampfer entsprechend der Figuren 1 bis 3 dargestellt, jedoch nicht in modularer Bauweise, sondern mit einteiligem Verdampferbereich 1 und Kühlerbereich 2. Selbstverständlich könnten hier auch weitere Kühlerbereiche oder einer oder mehrere Vorwärmerbereiche vorgesehen sein.

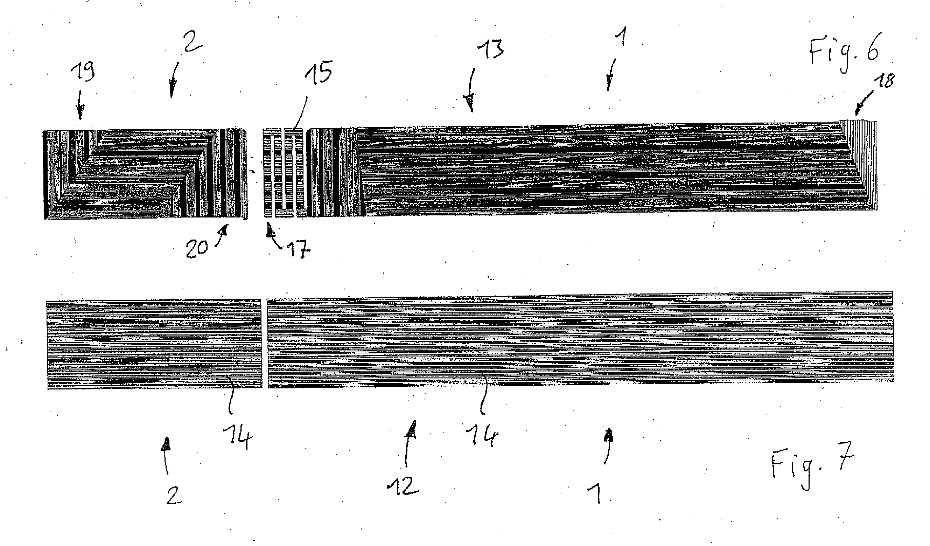

In der Fig. 6 ist ein Beispiel für die Strömungsführung auf der Sekundärseite 13 gezeigt. Wie man sieht, schließt sich an den Flüssigkeitseinlass 17 zunächst ein mäanderförmiger zweiter Strömungskanal 15 an, der in parallele Strömungskanäle 15 entlang der Längsachse des Verdampfers übergeht, die in einem Sammelbereich vor dem Dampfauslass 18 münden. Die dritten Strömungskanäle 16 hingegen sind im gesamten Kühlerbereich 2 hinsichtlich ihrer Durchströmung parallel zueinander geschaltet.

In der Fig. 7 erkennt man die Strömungsführung auf der Primärseite 12 des Verdampfers. Alle ersten Strömungskanäle 14 sind im Wesentlichen parallel zueinander positioniert.

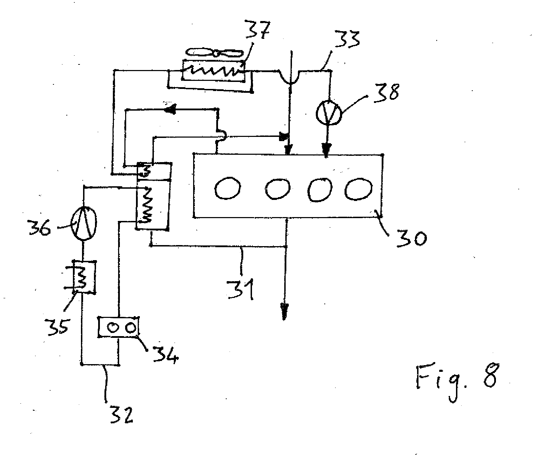

In der Fig. 8 ist schematisch ein Abwärmenutzsystem eines Verbrennungsmotors 30 dargestellt, umfassend eine Abgasrückführung 31. In der Abgasrückführung 31 ist ein erfindungsgemäßer Verdampfer positioniert mit einem Verdampferbereich 1 und einem Kühlerbereich 2.

Im Verdampferbereich 1 wird das Arbeitsmedium eines Dampfkreislaufes 32 verdampft, wohingegen im Kühlerbereich 2 der Abgasstrom der Abgasrückführung 31 über einen Kühlkreislauf 33 des Verbrennungsmotors 30 gekühlt wird.

Im Dampfkreislauf 32 ist in Strömungsrichtung des Arbeitsmediums hinter dem Verdampferbereich 1 ein Dampfmotor 34 vorgesehen, ferner ein Kondensator 35 und eine Speisepumpe 36. Weitere Aggregate, beispielsweise ein Vorratsbehälter oder weitere Wärmeträger und Verdampfer/Vorwärmer könnten vorgesehen sein.

Im Kühlkreislauf 33 ist in Strömungsrichtung des Kühlmediums hinter dem Kühlerbereich 2 zunächst ein Fahrzeugkühler 37 und anschließend eine Kühlwasserpumpe 38 vorgesehen, bevor das Kühlmedium zur Kühlung in den Verbrennungsmotor 30 strömt. Auch dieser Fahrzeugkühlkreislauf 33 könnte anders ausgeführt sein und insbesondere könnten weitere Aggregate mit dem Kühlkreislauf 33 gekühlt werden. Auch die Integration eines Hochtemperaturkühlers gefolgt von einem Niedertemperaturkühler in Strömungsrichtung des Abgases durch den Verdampfer hinter dem Verdampferbereich 1 ist möglich. Beispielsweise können dann beide Kühler in verschiedenen Kühlkreisläufen angeordnet sein, oder im selben Kühlkreislauf auf unterschiedlichen Temperaturniveaus. Ferner ist es möglich, dass die in der Fig. 8 angedeutete Ausführungsform nicht nur bei einem Fahrzeug, sondern auch in einer stationären Anlage mit einem Verbrennungsmotor 30 zur Anwendung gelangt.

## Patentansprüche

1. Verdampfer zur teilweisen oder vollständigen Verdampfung eines Flüssigkeitsstromes, insbesondere des Arbeitsmediums eines Dampfmotors (34) in einem Dampfkreislauf (32),
1.1 mit einer Primärseite (12), die einen gasförmigen Wärmeträger führt;
1.2 mit einer Sekundärseite (13), die den Flüssigkeitsstrom und einen aus dem Flüssigkeitsstrom durch Verdampfung mit Wärme aus dem Wärmeträger gewonnenen Dampfstrom führt, wobei
1.3 die Primärseite (12) einen ersten Strömungskanal (14) für den gasförmigen Wärmeträger aufweist, der sich von einem Wärmeträgereinlass (5) zu einem Wärmeträgerauslass (6) erstreckt, oder eine Vielzahl von ersten Strömungskanälen (14) für den gasförmigen Wärmeträger aufweist, die sich strömungsleitend getrennt voneinander oder strömungsleitend verbunden miteinander im Wesentlichen parallel zueinander entlang einer Längsachse des Verdampfers von einem gemeinsamen Wärmeträgereinlass (5) zu einem gemeinsamen Wärmeträgerauslass (6) erstrecken, und
1.4 die Sekundärseite (13) einen zweiten Strömungskanal (15) oder eine Vielzahl von hinsichtlich der Durchströmung mit dem Flüssigkeitsstrom und/oder Dampfstrom parallel geschaltete zweite Strömungskanäle (15) aufweist, die sich von einem gemeinsamen Flüssigkeitseinlass (17) zu einem gemeinsamen Dampfauslass (18) erstrecken;
**dadurch gekennzeichnet, dass**
1.5 die Sekundärseite (13) ferner einen dritten Strömungskanal (16) oder eine Vielzahl von hinsichtlich der Durchströmung parallel geschaltete dritte Strömungskanäle (16) aufweist, der/die einen Kühlmediumstrom von einem gemeinsamen Kühlmediumeinlass (19) zu einem gemeinsamen Kühlmediumauslass (20) führen und der/die mit der Primärseite (12) in wärmeübertragender Verbindung steht/stehen, um den gasförmigen Wärmeträger zu kühlen.

2. Verdampfer gemäß Anspruch 1, **dadurch gekennzeichnet, dass** die Primärseite (12) einen Verdampferbereich (1) und einen Kühlerbereich (2) aufweist, durch welche der oder die ersten Strömungskanäle (14) verlaufen, wobei in Strömungsrichtung des gasförmigen Wärmeträgers durch den oder die ersten Strömungskanäle (14) der Verdampferbereich (1) in Reihe vor den Kühlerbereich (2) geschaltet ist.

3. Verdampfer gemäß Anspruch 2, **dadurch gekennzeichnet, dass** der oder die axialen Abschnitte des oder der ersten Strömungskanäle (14) im Verdampferbereich (1) mit dem oder den axialen Abschnitten des oder der ersten Strömungskanäle (14) im Kühlerbereich (2) fluchten und insbesondere in Axialrichtung des Verdampfers gesehen deckungsgleich ausgeführt sind.

4. Verdampfer gemäß einem der Ansprüche 2 oder 3, **dadurch gekennzeichnet, dass** in Axialrichtung des Verdampfers der Wärmeträgereinlass (5), der oder die axialen Abschnitte des oder der ersten Strömungskanäle (14) im Verdampferbereich (1), der oder die axialen Abschnitte des oder der ersten Strömungskanäle (14) im Kühlerbereich (2) und der Wärmeträgerauslass (6) in der genannten Reihenfolge unmittelbar hintereinander angeordnet sind, wobei der Kühlmediumauslass (20) und der Flüssigkeitseinlass (17) in Axialrichtung des Verdampfers mit Abstand zu dem Kühlmediumeinlass (19), dem Wärmeträgerauslass (6), dem Dampfauslass (18) und dem Wärmeträgereinlass (5) positioniert sind.

5. Verdampfer gemäß einem der Ansprüche 1 bis 4, **dadurch gekennzeichnet, dass** der Verdampfer eine Vielzahl von wärmeleitenden, aufeinandergestapelten Platten (9), die insbesondere mit den gasförmigen Wärmeträger, den Flüssigkeitsstrom und/oder Dampfstrom und/oder den Kühlmediumstrom leitenden Lamellen versehen sind, aufweist, welche die Primärseite (12) wechselseitig von der Sekundärseite (13) mediumdicht trennen und die Primärseite (12) und die Sekundärseite (13) insbesondere gegenüber der Umgebung abdichten, und die Vielzahl der ersten Strömungskanäle (14) in Stapelrichtung der Platten in jedem zweiten Zwischenraum zwischen den Platten ausgeführt sind.

6. Verdampfer gemäß einem der Ansprüche 3 bis 5, **dadurch gekennzeichnet, dass** der Verdampfer an einer Schnittstelle (8) zwischen dem Verdampferbereich (1) und dem Kühlerbereich (2) aus zwei voneinander lösbaren Modulen zusammengefügt ist, welche insbesondere aneinander angeflanscht sind.

7. Verdampfer gemäß Anspruch 6, **dadurch gekennzeichnet, dass** zwischen den axialen Abschnitten der ersten Strömungskanäle (14) im Modul mit dem Verdampferbereich (1) und den axialen Abschnitten der ersten Strömungskanäle (14) im Modul mit dem Kühlerbereich (2) ein Axialspalt vorgesehen ist.

8. Verdampfer gemäß einem der Ansprüche 6 oder 7, **dadurch gekennzeichnet, dass** das Modul mit dem Verdampferbereich (1) und das Modul mit dem Kühlerbereich (2) jeweils an ihrem die Schnittstelle (8) bildenden axialen Ende oder insbesondere an beiden axialen Enden einen Umfangsflansch (4, 7) aufweisen, und die axialen Enden der Platten (9) eines der beiden Module an der Schnittstelle (8) in Axialrichtung aus dem Umfangsflansch (4) herausragen und im verschraubten Zustand der Umfangsflansch (4) bis in den Flansch (4) des anderen Moduls hineinragen.

9. Verdampfer gemäß einem der Ansprüche 1 bis 8, **dadurch gekennzeichnet, dass** die Anzahl von ersten Strömungskanälen (14) vom gemeinsamen Wärmeträgereinlass (5) zum gemeinsamen Wärmeträgerauslass (6) konstant ist.

10. Verdampfer gemäß einem der Ansprüche 1 bis 9, **dadurch gekennzeichnet, dass** die Anzahl der dritten parallel geschalteten Strömungskanäle (16) von der Anzahl der in dem gemeinsamen Dampfauslass (18) mündenden zweiten Strömungskanäle (15) abweicht, insbesondere größer ist.

11. Verdampfer gemäß einem der Ansprüche 1 bis 10, **dadurch gekennzeichnet, dass** die Sekundärseite (13) ferner einen vierten Strömungskanal (22) oder eine Vielzahl von hinsichtlich der Durchströmung parallel geschalteten vierten Strömungskanälen (22) aufweist, der/die einen zweiten Kühlmediumstrom von einem gemeinsamen zweiten Kühlmediumeinlass (24) zu einem gemeinsamen zweiten Kühlmediumauslass (25) führen und der/die mit der Primärseite (12) in wärmeübertragender Verbindung steht/stehen, um den gasförmigen Wärmeträger zu kühlen.

12. Verdampfer gemäß Anspruch 5 und einem der Ansprüche 10 oder 11,
**dadurch gekennzeichnet, dass** der Verdampfer wenigstens eine Deckplatte (10) und wenigstens eine Bodenplatte (11) für jeweils den Verdampferbereich (1) und den Kühlerbereich (2) aufweist, welche den Stapel aus Platten (9) auf entgegengesetzten Seiten abschließen, wobei die Deckplatte (10) und/oder die Bodenplatte (11) des Verdampferbereichs (1) frei von integrierten Strömungskanälen ausgeführt ist, und in die Deckplatte (10) und/oder die Bodenplatte (11) des Kühlerbereichs (2) jeweils einer oder eine Vielzahl von dritten Strömungskanälen (16) und/oder vierten Strömungskanälen (22) integriert ist.

13. Verdampfer gemäß einem der Ansprüche 1 bis 12, **dadurch gekennzeichnet, dass** in dem gemeinsamen Wärmeträgereinlass (5), im gemeinsamen Wärmeträgerauslass (6) und/oder in dem Axialspalt zwischen den axialen Abschnitten der ersten Strömungskanäle (14) im Bereich der Schnittstelle (8) ein Trennsteg (21) vorgesehen ist, welcher den Strömungsquerschnitt für den gasförmigen Wärmeträger in zwei, insbesondere gleich große Strömungsdurchgänge unterteilt.

14. Abwärmenutzsystem eines Verbrennungsmotors (30) mit einer Abgasrückführung (31) eines Abgasstromes von einer Abgasseite des Verbrennungsmotors (30) auf eine Frischluftseite des Verbrennungsmotors (30), **dadurch gekennzeichnet, dass** in der Abgasrückführung (31) ein Verdampfer gemäß einem der Ansprüche 1 bis 13 positioniert ist, dessen Primärseite (12) mit dem Abgasstrom der Abgasrückführung (31) als gasförmigem Wärmeträger beaufschlagt ist.

15. Abwärmenutzsystem gemäß Anspruch 14, **dadurch gekennzeichnet, dass** ein Dampfmotor (34) in einem Dampfkreislauf (32) vorgesehen ist, in welchem unter Verrichtung mechanischer Arbeit ein Arbeitsmedium expandiert wird, wobei die Sekundärseite (13) des Verdampfers im Verdampferbereich (1) zur Verdampfung des Arbeitsmediums mit diesem beaufschlagt ist.
